# EUROPEAN PATENT SPECIFICATION

(11) **EP 4 086 116 B1**
(45) Date of publication and mention of the grant of the patent: **13.12.2023**
(21) Application number: 21214685.6
(22) Date of filing: 15.12.2021
(51) Int. Cl.: B60Q 9/00, B60R 1/00

(54) **VEHICLE DOOR-OPENING ANTI-COLLISION METHOD AND APPARATUS, VEHICLE, AND STORAGE MEDIUM**
VERFAHREN UND VORRICHTUNG ZUM KOLLISIONSSCHUTZ BEIM ÖFFNEN VON FAHRZEUGTÜREN, FAHRZEUG UND SPEICHERMEDIUM
PROCÉDÉ ET APPAREIL D'OUVERTURE DE PORTE DE VÉHICULE ANTICOLLISION, VÉHICULE ET SUPPORT D'INFORMATIONS

(30) Priority: 07.05.2021 CN 202110496888
(43) Date of publication of application: 09.11.2022
(73) Proprietor: Guangzhou Xiaopeng Motors Technology Co., Ltd., Guangzhou, Guangdong 510000 (CN)
(72) Inventor: ZHANG, Jiawen, Guangzhou, 510000 (CN)
(74) Representative: Ran, Handong

(56) References cited:
- EP-A1- 3 620 332
- EP-A2- 3 187 372
- KR-A- 20140 080 048

## Description

### TECHNICAL FIELD

The present disclosure relates to the field of vehicle technologies, and more specifically, to a vehicle door-opening anti-collision method, a vehicle door-opening anticollision apparatus, a vehicle, and a storage medium.

### BACKGROUND

With the development of the automobile industry and the advancement of the human-machine interaction technology, more and more smart vehicles have entered people's vision. Compared with traditional vehicles, the smart vehicles can handle emergencies in time, but the potential of the smart vehicles has not been fully developed yet. Some functions of the smart vehicles that are superior to those of the traditional vehicles have not been applied. For example, in the process of using a vehicle, another vehicle parked on the left or right side of the vehicle is often collided when opening a door of the vehicle, causing paint of the other vehicle on either of the sides to be scratched, etc. and causing unnecessary economic losses to an owner of the vehicle. EP 3620332 A1 discloses a driver assistance system and method for vehicle flank safety. KR 20140080048 A discloses a system and method for preventing collision of vehicle's door.

### SUMMARY

In view of the above-mentioned problem, the present disclosure provides a vehicle door-opening anti-collision method, a vehicle door-opening anti-collision apparatus, a vehicle, and a storage medium to overcome or at least partially address the above-mentioned problem in the related art.

In a first aspect, an example of the present disclosure provides a vehicle door-opening anti-collision method. The method includes: establishing a surround view interface diagram for the vehicle; obtaining an image of an obstacle around the vehicle when the vehicle is in a stopped state; performing an identification on the image of the obstacle to obtain a contour range of the obstacle in the surround view interface diagram; and determining, when an overlapping area exists between the contour range and a door opening/closing range, that a risk of collision exists for opening a door of the vehicle and determining a corresponding risk warning. Said determining, when the overlapping area exists between the contour range and the door opening/closing range, that the risk of collision exists for opening the door of the vehicle and determining the corresponding risk warning includes: determining warning prompt information corresponding to a size of the overlapping area based on the size of the overlapping area; and outputting the warning prompt information. The warning prompt information is used for prompting that a risk of collision exists for opening the door of the vehicle. Said determining the warning prompt information corresponding to the size of the overlapping area based on the size of the overlapping area includes: comparing the size of the overlapping area with a size of a predetermined overlapping area; and outputting first warning prompt information when the size of the overlapping area is smaller than the size of the predetermined overlapping area and an occupant is on a seat corresponding to the overlapping area. The first warning prompt information is used for prompting the occupant to pay attention when opening the door. The method further includes, subsequent to said comparing the size of the overlapping area with the size of the predetermined overlapping area: outputting second warning prompt information when the size of the overlapping area is greater than the size of the predetermined overlapping area and the occupant is on the seat corresponding to the overlapping area. The second warning prompt information is used for prompting a driver to adjust a parking location.

In a second aspect, an example of the present disclosure provides a vehicle door-opening anti-collision apparatus. The apparatus includes an image establishing module, an image obtaining module, an image identification module and a risk determination module. The image establishing module is configured to establish a surround view interface diagram for the vehicle. The image obtaining module is configured to obtain an image of an obstacle around the vehicle when the vehicle is in a stopped state. The image identification module is configured to perform an identification on the image of the obstacle to obtain a contour range of the obstacle in the surround view interface diagram. The risk determination module is configured to determine, when an overlapping area exists between the contour range and a door opening/closing range, that a risk of collision exists for opening a door of the vehicle and determine a corresponding risk warning. The apparatus further includes an information output module. The information output module includes an information determination sub-module configured to determine warning prompt information corresponding to a size of the overlapping area based on the size of the overlapping area. The information output module is configured to output the warning prompt information. The warning prompt information is used for prompting that a risk of collision exists for opening the door of the vehicle. The information determination sub-module includes: a size comparison unit configured to compare the size of the overlapping area with a size of a predetermined overlapping area, a first information output unit configured to output first warning prompt information when the size of the overlapping area is smaller than the size of the predetermined overlapping area and an occupant is on a seat corresponding to the overlapping area, where the first warning prompt information is used for prompting the occupant to pay attention when opening the door, and a second information output unit configured to output second warning prompt information when the size of the overlapping area is greater than the size of the predetermined overlapping area and the occupant is on the seat corresponding to the overlapping area, where the second warning prompt information is used for prompting a driver to adjust a parking location.

In a third aspect, an example of the present disclosure provides a vehicle, including: one or more processors; a memory; and one or more programs stored in the memory and configured to be executed by the one or more processors. The one or more programs are configured to implement the above-mentioned method.

In a fourth aspect, an example of the present disclosure provides a computer-readable storage medium having program codes stored thereon. The program codes, when invoked by a processor, implement the foregoing method.

Examples of the present disclosure provide a vehicle door-opening anti-collision method and apparatus, a vehicle, and a storage medium. The method includes: establishing a surround view interface diagram for the vehicle; obtaining an image of an obstacle around the vehicle when the vehicle is in a stopped state; performing an identification on the image of the obstacle to obtain a contour range of the obstacle in the surround view interface diagram; and determining, when an overlapping area exists between the contour range and a door opening/closing range, that a risk of collision exists for opening a door of the vehicle and determining a corresponding risk warning. In this way, by determining whether the overlapping area exists between the contour range of the obstacle around the vehicle and the door opening/closing range, it is determined whether the risk of collision exists for opening the door of the vehicle, thereby reducing the risk of collision for opening the door of the vehicle.

### BRIEF DESCRIPTION OF DRAWINGS

In order to explain the technical solutions in the examples of the present disclosure more clearly, the following will briefly introduce the accompanying drawings needed in the description of the examples. Obviously, the accompanying drawings in the following description are only some examples of the present disclosure. For those skilled in the art, without creative work, other drawings can be obtained from these accompanying drawings.
FIG. 1 illustrates a schematic flowchart of a vehicle door-opening anti-collision method according to an example of the present disclosure.
FIG. 2 illustrates a schematic surround view interface diagram according to an example of the present disclosure.
FIG. 3 illustrates a schematic flowchart of another vehicle door-opening anticollision method according to an example of the present disclosure.
FIG. 4 illustrates another schematic surround view interface diagram according to an example of the present disclosure.
FIG. 5 illustrates yet another schematic surround view interface diagram according to an example of the present disclosure.
FIG. 6 illustrates still another schematic surround view interface diagram according to an example of the present disclosure.
FIG. 7 illustrates a schematic flowchart of yet another vehicle door-opening anticollision method according to an example of the present disclosure.
FIG. 8 illustrates a schematic flowchart of still another vehicle door-opening anticollision method according to an example of the present disclosure.
FIG. 9 illustrates a schematic flowchart of step S440 in a vehicle door-opening anticollision method according to an example of the present disclosure.
FIG. 10 illustrates a schematic flowchart of a further vehicle door-opening anticollision method according to an example of the present disclosure.
Fig. 11 illustrates a block diagram of modules in a vehicle door-opening anticollision apparatus according to an example of the present disclosure.
FIG. 12 illustrates a block diagram of a vehicle according to an example of the present disclosure, the vehicle being configured to implement a vehicle door-opening anticollision method according to an example of the present disclosure.
FIG. 13 illustrates a structural block diagram of a computer-readable storage medium according to an example of the present disclosure.

### DESCRIPTION OF EMBODIMENTS

In order to enable those skilled in the art to better understand the solutions of the present disclosure, the technical solutions in the examples of the present disclosure will be described clearly and completely below in conjunction with the accompanying drawings in the examples of the present disclosure.

With the development of the automobile industry and the advancement of the human-machine interaction technology, more and more smart vehicles have entered people's vision. Compared with traditional vehicles, the smart vehicles can handle emergencies in time, but the potential of the smart vehicles has not been fully developed yet. Some functions of the smart vehicles that are superior to those of the traditional vehicles have not been applied. For example, in the process of using a vehicle, another vehicle parked on the left or right side of the vehicle is often collided when opening a door of the vehicle, causing paint of the other vehicle on either of the sides to be scratched, etc. and causing unnecessary economic losses to an owner of the vehicle.

For the above-mentioned problem, the inventor proposes a vehicle door-opening anti-collision method and apparatus, a vehicle and a storage medium according to the examples of the present disclosure. By determining whether an overlapping area exists between a contour range of an obstacle around the vehicle and a door opening/closing range, it is determined whether a risk of collision exists for opening a door of the vehicle, thereby reducing the risk of collision for opening the door of the vehicle. The specific vehicle door-opening anti-collision method will be described in detail in the subsequent examples.

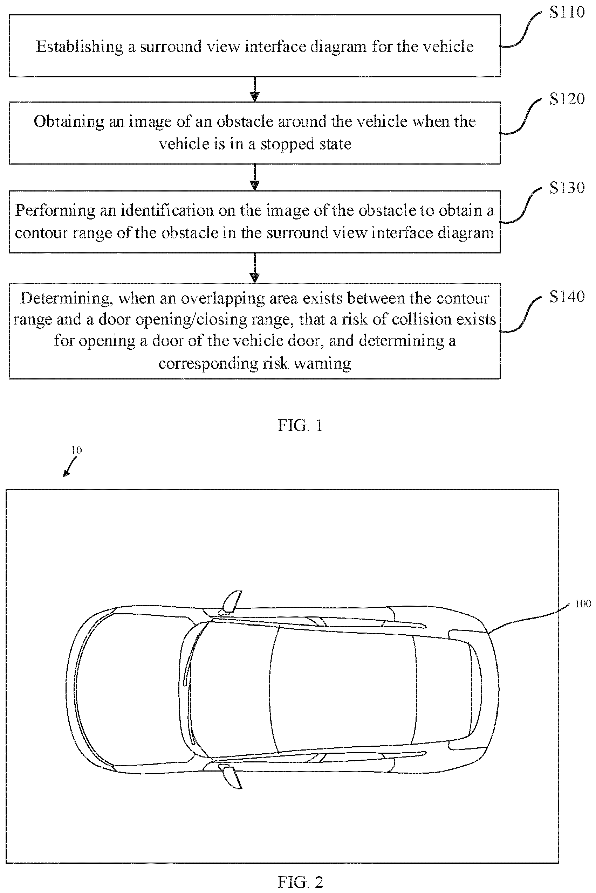

Please referring to FIG. 1, FIG. 1 illustrates a schematic flowchart of a vehicle door-opening anti-collision method according to an example of the present disclosure. The flow illustrated in FIG. 1 will be described in detail below. The vehicle door-opening anti-collision method may specifically include the following steps S110 to S140.

At step S 110, a surround view interface diagram for the vehicle is established.

In this example, the vehicle may include a surround view camera, images around the vehicle may be captured through the surround view camera, and a surround view interface diagram for the vehicle may be established based on the captured images around the vehicle. In some examples, the surround view camera may include a front camera, a rear camera, a left camera, and a right camera, images captured by the four cameras are obtained respectively, and the images captured by the four cameras can be stitched in sequence to obtain a surround view diagram around the vehicle. Contour information of the vehicle can be obtained through a roofmounted camera of the vehicle. Based on the obtained surround view diagram around the vehicle and the contour information of the vehicle, the surround view interface diagram for the vehicle can be established. The surround view interface diagram for the vehicle includes at least the vehicle itself. As illustrated in FIG. 2, a surround view interface diagram 10 includes a vehicle 100.

In some examples, images captured by a camera usually have certain distortions, the distortions of the images can be corrected based on a correction algorithm to obtain more normal images, and then a more accurate surround view interface diagram for the vehicle can be obtained. A distortion of an image may include a radial distortion and a tangential distortion. By obtaining corresponding radial distortion and tangential distortion correction formulas, the radial distortion and the tangential distortion can be corrected. Further, an Open Source Computer Vision Library (OpenCV) can also be used for the distortion correction. Specifically, an image of a calibration board can be captured, corner points of the calibration board can be detected, and a sub-pixel level calibration can be completed. Then, the camera can be calibrated to obtain an internal parameter matrix of the camera and a distortion coefficient of the camera, and the distortion correction is performed on the image through the internal parameter matrix and the distortion coefficient to obtain an image that meets requirements.

At step S120, when the vehicle is in a stopped state, an image of an obstacle around the vehicle is obtained.

In the process of using the vehicle, it often occurs, due to opening a door of the vehicle, that another vehicle parked next to the vehicle is scratched, or the vehicle itself is damaged. Therefore, it is necessary to provide a way by which a user can be warned of a risk before opening the door so as to reduce a risk of collision when opening the door of the vehicle. In this example, it can be determined whether the risk of collision exists when opening the door of the vehicle by determining whether an overlapping area exists between a contour range of the obstacle and a door opening/closing range, and a corresponding risk warning is determined. Specifically, when the vehicle is in the stopped state, the image of the obstacle around the vehicle can be obtained.

Furthermore, some vehicle models do not have an ignition-off button, so it can be determined whether the vehicle is in the stopped state by determining whether the vehicle is in a power-off state. In some examples, for example, in an electric vehicle, a status of a battery can be obtained through a battery management system to determine whether the vehicle is in the power-off state. In other examples, an on/off state of a relay can also be read to determine whether the vehicle is in the power-off state, which is not limited here. When the vehicle is in the power-off state, it can be determined that the vehicle is in the stopped state.

In some examples, the vehicle includes the camera, and when the vehicle is in the stopped state, the image of the obstacle around the vehicle can be captured through the camera. The camera may be a Complementary Metal Oxide Semiconductor (CMOS) high-definition camera, a Charge-coupled Device (CCD) high-definition camera, an infrared high-definition camera, etc. The camera can be arranged on a left reflector of the vehicle, a right reflector of the vehicle, on a roof of the vehicle, or beside a window of the vehicle or on a rear windshield, etc., which is not limited here. Further, a coverage range of the camera can be 360°, so that images in various directions can be captured. The obstacle may be an object adjacent to the vehicle which may cause scratches on the door of the vehicle, such as another vehicle, a wall, a warning sign, etc., which is not limited here.

At step S130, an identification is performed on the image of the obstacle to obtain a contour range of the obstacle in the surround view interface diagram.

In this example, after obtaining the image of the obstacle around the vehicle, the identification can be performed on the image of the obstacle to obtain the contour range of the obstacle, so as to determine whether the risk of collision exists for opening the door of the vehicle based on the contour range of the obstacle.

In some examples, in order to perform the identification on the image of the obstacle, a position and a rough contour of the obstacle can be determined through a detection algorithm. Based on the position and the contour of the obstacle, the obstacle can be accurately identified through a classification algorithm. In the meantime, feature points of the obstacle can be positioned through a regression algorithm to obtain contour information of the obstacle and thus the contour range of the obstacle. For example, when the obstacle is an adjacent vehicle, the position and the rough contour of the adjacent vehicle can be first determined through the detection algorithm, Then, the adjacent vehicle can be identified through the classification algorithm to determine that the obstacle is a vehicle, and the feature points of the adjacent vehicle are identified to position the feature points of the adjacent vehicle, so that the contour range of the adjacent vehicle can be obtained.

Further, after the vehicle obtains the image of the obstacle, the image can be preprocessed first. The preprocessing method may include converting the image into a grayscale image, image enhancement, noise removal, etc., which is not limited here. By identifying the preprocessed image of the obstacle, a more accurate contour range of the obstacle can be obtained.

At step S 140, when an overlapping area exists between the contour range and a door opening/closing range, it is determined that a risk of collision exists for opening a door of the vehicle, and the corresponding risk warning is determined.

In this example, after the contour range of the obstacle is obtained, the door opening/closing range of the vehicle can be determined. By comparing the contour range of the obstacle and the door opening/closing range to determine whether the overlapping area exists, it can be determined whether the risk of collision exists for opening the door of the vehicle. The door opening/closing range may refer to a range that the door of the vehicle travels when the door of the vehicle transitions from a closed state to a maximum extent to which it can be opened. When the vehicle has four doors, four door opening/closing ranges can be obtained; and when the vehicle has two doors, two door opening/closing ranges can be obtained. When the overlapping area exists between the contour range of the obstacle and at least one door opening/closing range, it can be determined that the risk of collision exists for opening the door of the vehicle, and the corresponding risk warning can be further determined.

In some examples, the door opening/closing range of the vehicle can be obtained based on a maximum opening angle of the door. Specifically, a shape of the door opening/closing range is generally close to a fan shape, the maximum opening angle of the door and a width of the door can be obtained, an area size of the fan shape formed when the door is opened to the maximum opening angle is calculated based on the maximum opening angle of the door and the width of the door, and the area can be used as the door opening/closing range of the vehicle.

In some examples, the contour range of the obstacle can be compared with the door opening/closing range. When an intersection exists between the contour range of the obstacle and the door opening/closing range, it can be considered that the overlapping area exists between the contour range of the obstacle and the door opening/closing range, and the intersection can be used as the overlapping area. When the overlapping area exists between the contour range of the obstacle and the door opening/closing range, it can indicate that, when the door corresponding to the door opening/closing range is opened, there is a possibility for the door to contact with the obstacle, thereby scratching the obstacle and damaging the obstacle or the door of the vehicle. Therefore, the corresponding risk warning can be further determined to reduce the risk of collision for opening the door of the vehicle.

In some examples, the corresponding risk warning may be outputting risk warning prompt information to prompt the user to pay attention when opening the door. It can also be controlling the opening angle of the door so that the opened door will not touch the obstacle. Further, the corresponding risk warning can also be determined based on a size of the overlapping area between the contour range of the obstacle and the door opening/closing range.

In the vehicle door-opening anti-collision method according to the foregoing examples, when the vehicle is in the stopped state, the image of the obstacle around the vehicle is obtained; the identification is performed on the image of the obstacle to obtain the contour range of the obstacle; and when the overlapping area exists between the contour range and the door opening/closing range, it is determined that the risk of collision exists for opening the door of the vehicle and the corresponding risk warning is determined. In this way, by determining whether the overlapping area exists between the contour range of the obstacle around the vehicle and the door opening/closing range, it is determined whether the risk of collision exists for opening the door of the vehicle, thereby reducing the risk of collision for opening the door of the vehicle.

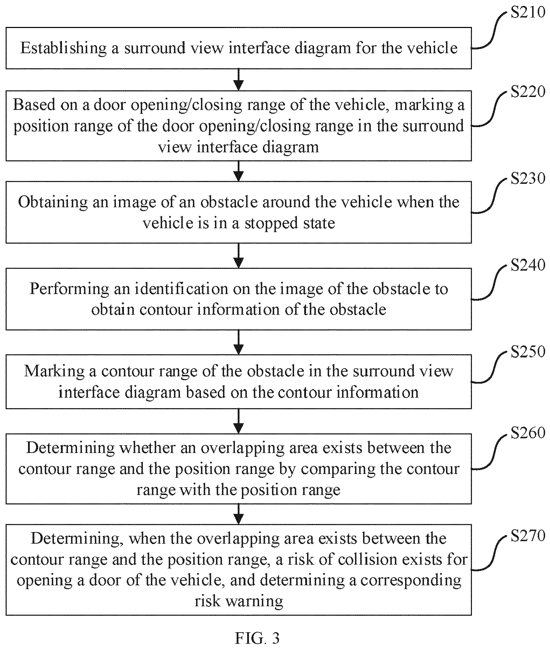

Please referring to FIG. 3, FIG. 3 illustrates a schematic flowchart of another vehicle door-opening anti-collision method according to an example of the present disclosure. The flow illustrated in FIG. 3 will be described in detail below. The method may specifically include the following steps S210 to S270.

At step S210, a surround view interface diagram for the vehicle is established.

For the specific description of step S210, reference can be made to step S110, which will not be repeated here.

At step S220, based on a door opening/closing range of the vehicle, a position range of the door opening/closing range is marked in the surround view interface diagram.

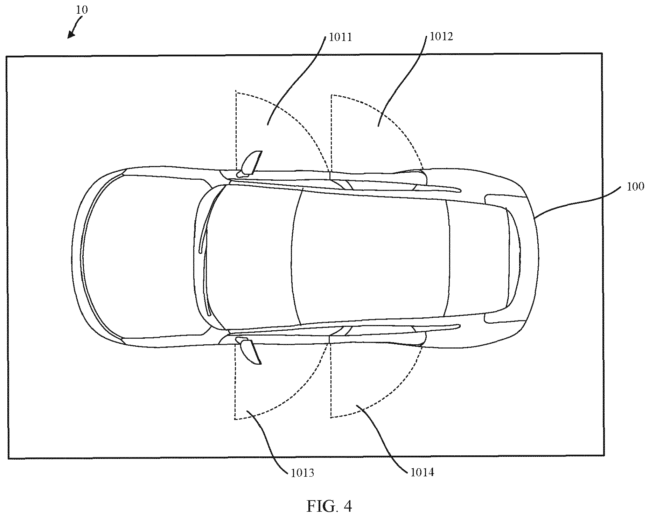

In this example, the position range of the door opening/closing range in the surround view interface diagram can be marked based on the door opening/closing range of the vehicle. The door opening/closing range may refer to a range that a door of the vehicle travels when the door of the vehicle transitions from a closed state to a maximum extent to which it can be opened. In some examples, a ratio of an actual size of the vehicle to a size of the vehicle in the surround view interface diagram can be calculated, and the door opening/closing range of the vehicle can be shrunk in accordance with this ratio and marked in the surround view interface diagram, so that the position range of door opening/closing of the vehicle can be obtained. For example, for the vehicle 100 illustrated in FIG. 4, by calculating the ratio of the actual size of the vehicle 100 to the size of the vehicle 100 in the surround view interface diagram 10 illustrated in FIG. 4 and determining the door opening/closing ranges of four doors of the vehicle 100, the door opening/closing ranges of the four doors of the vehicle 100 can be shrunk in accordance with the above ratio and marked in the surround view interface diagram 10, so that a position range of opening/closing a front right door 1011, a position range of opening/closing a rear right door 1012, a position range of opening/closing a front left door 1013 and a position range of opening/closing a rear left door 1014 can be obtained.

In some examples, the surround view interface diagram for the vehicle can be established and the position range of the door opening/closing range can be marked in the surround view interface diagram, before driving. Alternatively, the surround view interface diagram for the vehicle can be established and the position range of the door opening/closing range can be marked in the surround view interface diagram, when it is detected that the vehicle is in the stopped state. This is not limited here.

At step S230, when the vehicle is in a stopped state, an image of an obstacle around the vehicle is obtained.

For the specific description of step S230, reference can be made to step S120, which will not be repeated here.

At step S240, an identification is performed on the image of the obstacle to obtain contour information of the obstacle.

In this example, the identification may be performed on the image of the obstacle to obtain the contour information of the obstacle. In some examples, in order to perform the identification on the image of the obstacle, a position and a rough contour of the obstacle can be determined through a detection algorithm. Based on the position and the contour of the obstacle, the obstacle can be accurately identified through a classification algorithm. In the meantime, feature points of the obstacle can be positioned through a regression algorithm to obtain the contour information of the obstacle.

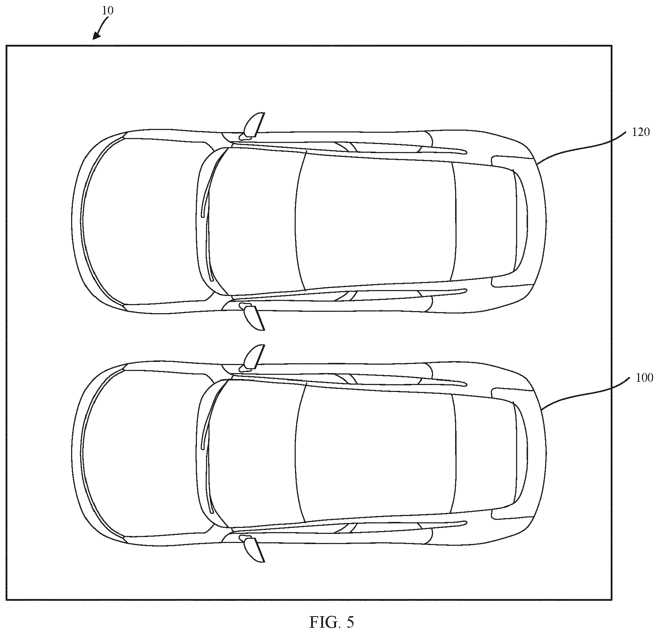

In some examples, in order to perform the identification on the image of the obstacle, features of the image of the obstacle can be extracted, a type of the obstacle can be determined based on the extracted features, and then the contour information of the obstacle can be determined based on the type of the obstacle. For example, as illustrated in FIG. 5, a vehicle 120 is parked next to the vehicle 100, so the type of the obstacle is a vehicle. When the type of the obstacle is identified as a vehicle, the contour information of the vehicle can be directly obtained; and further, when the type of the obstacle is identified as a warning sign, the contour information of the warning sign can be obtained.

At step S250, based on the contour information, a contour range of the obstacle is marked in the surround view interface diagram.

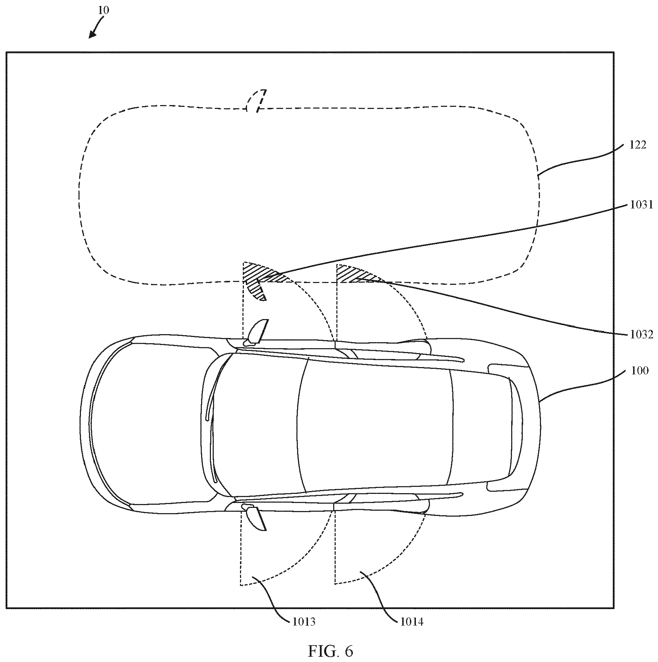

In this example, based on the contour information of the obstacle, the contour range of the obstacle can be marked in the surround view interface diagram. Specifically, an actual contour range of the obstacle can be determined based on the contour information of the obstacle. Then, by calculating the ratio of the actual size of the vehicle to the size of the vehicle in the surround view interface diagram, the actual contour range of the obstacle is shrunk in accordance with the ratio. In the meantime, a spatial position relation between feature points of the vehicle and the feature points of the obstacle can be obtained, a relative position relation between the obstacle and the vehicle in the surround view interface diagram can be obtained after coordinate conversion, and then the contour range of the obstacle is marked in the surround view interface diagram based on the relative position relation between the obstacle and the vehicle in the surround view interface diagram. The contour range of the obstacle may include the contour of the entire obstacle, or it may only include the contour of a side of the obstacle close to the vehicle, or it may only include the contour of a side of the obstacle close to the door, which is not limited here. A camera is arranged on the vehicle, and the contour of the obstacle can be obtained through the camera. For example, referring to FIG. 5 and FIG. 6, when the obstacle is the vehicle 120, the contour information of the vehicle 120 can be obtained, and then the actual contour range of the vehicle 120 can be obtained. The actual contour range of the vehicle 120 is shrunk proportionally, the spatial position relation between the vehicle 120 and the vehicle 100 can be obtained, the relative position relation between the vehicle 120 and the vehicle 100 in the surround view interface diagram 10 can be obtained, and the contour range 122 of the vehicle 120 can be marked in the surround view interface diagram 10 based on the relative position relation.

At step S260, it is determined whether an overlapping area exists between the contour range and the position range by comparing the contour range with the position range.

In this example, the contour range of the obstacle may be compared with the position range of door opening/closing of the vehicle to determine whether the overlapping area between the contour range of the obstacle and the position range of the door opening and closing of the vehicle. Specifically, since both the contour range of the obstacle and the position range of the door opening/closing of the vehicle are marked in the surround view interface diagram, a coordinate system can be established in the surround view interface diagram to obtain boundary coordinate values of the position range of the door opening/closing of the vehicle. A coordinate value range of the position range can be obtained based on the boundary coordinate values of the position range of the position range of the door opening/closing of the vehicle, and the coordinate value range of the position range is used to characterize the position range of the door opening/closing of the vehicle. Similarly, boundary coordinate values of the contour range of the obstacle can be obtained, a coordinate value range of the contour range can be obtained based on the boundary coordinate values of the contour range of the obstacle, and the coordinate value range of the contour range can be used to characterize the contour range of the obstacle. It can be determined whether an intersection exists between the position range of the door opening/closing of the vehicle and the contour range of the obstacle by comparing the coordinate value range of the position range of the door opening/closing of the vehicle with the coordinate value range of the contour range of the obstacle. It can be determined whether the overlapping area exists between the contour range and the position range by checking whether the intersection exists between the contour range of the obstacle and the position range of the door opening/ closing of the vehicle in the surround view interface diagram. For example, from the surround view interface diagram 10 as illustrated in FIG. 6, it can be seen that an intersection exists between the contour range 122 of the vehicle 120 and the position range 1011 of the front right door of the vehicle 100, that is, an overlapping area 1031 exists; and an intersection exists between the contour range 122 of the vehicle 120 and the position range 1012 of the rear right door of the vehicle 100, that is, an overlapping area 1032 exists.

At step S270, when the overlapping area exists between the contour range and the position range, it is determined that a risk of collision exists for opening a door of the vehicle, and a corresponding risk warning is determined.

In this example, when the overlapping area exists between the contour range and the position range, it can be determined that the risk of collision exists for opening the door of the vehicle, and the corresponding risk warning can be determined. For example, in the surround view interface diagram 10 illustrated in FIG. 6, when the overlapping area 1031 exists between the contour range 122 of the vehicle 120 and the position range 1011 of the front right door of the vehicle 100 and the overlapping area 1032 exists between the contour range 122 of the vehicle 120 and the position range 1012 of the rear right door of the vehicle 100, it can indicate that the risk of collision with the vehicle 120 exists for opening the front right door or the rear right door of the vehicle 100. Therefore, the corresponding risk warning can be determined to reduce the risk of collision with the vehicle 120 for opening the door of the vehicle 100.

Compared with the vehicle door-opening anti-collision method illustrated in FIG. 1, in the vehicle door-opening anti-collision method provided by the foregoing example, the position range of the door opening/closing range of the vehicle in the surround view interface diagram is additionally marked based on the door opening/closing range of the vehicle. In the meantime, the contour range of the obstacle is marked in the surround view interface diagram based on the contour information of the obstacle. It is determined whether the risk of collision exists for opening the door of the vehicle by determining whether the overlapping area exists between the position range and the contour range of the obstacle, thereby improving the accuracy of determining the risk of collision for the vehicle.

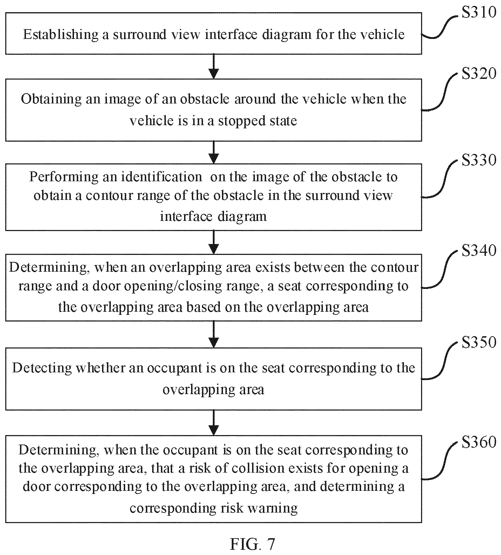

Please referring to FIG. 7, FIG. 7 is a schematic flowchart of another vehicle door-opening anti-collision method according to an example of the present disclosure. The flow illustrated in FIG. 7 will be described in detail below. The method may specifically include the following steps S310 to S360.

At step S310, a surround view interface diagram for the vehicle is established.

At step S320, when the vehicle is in a stopped state, an image of an obstacle around the vehicle is obtained.

At step S330, an identification is performed on the image of the obstacle to obtain a contour range of the obstacle in the surround view interface diagram.

For the specific description of step S310 to step S330, reference can be made to step S 110 to step S130, which will not be repeated here.

At step S340, when an overlapping area exists between the contour range and a door opening/closing range, a seat corresponding to the overlapping area is determined based on the overlapping area.

In this example, when the overlapping area exists between the contour range of the obstacle and the door opening/closing range, it can be further detected whether an occupant is on the seat corresponding to the overlapping area. It can be warned that a risk of collision exists for the current seat when the occupant is on the seat. Specifically, when the overlapping area exists between the contour range and the door opening/closing range, the seat corresponding to the overlapping area may be determined first based on the overlapping area.

In some examples, the door opening/closing range includes the opening/ closing range of each door. It can be determined between which door's opening/closing range and the obstacle the overlapping area exists based on a position of the overlapping area. After the door is determined, the seat corresponding to the door can be determined as the seat corresponding to the overlapping area. For example, in the surround view interface diagram illustrated in FIG. 6, the overlapping areas 1031 and 1032 exist between the door opening/closing range of the vehicle 100 and the contour range 122 of the vehicle 120. From the surround view interface diagram in FIG. 6, it can be seen that the overlapping area 1031 is the overlapping area between the opening/closing range of the front right door and the contour range 122 of the vehicle 120, and therefore, the seat corresponding to the overlapping area 1031 is the seat corresponding to the front right door, that is, the front passenger seat; and the overlapping area 1032 is the overlapping area between the opening/closing range of the rear right door and the contour area 122 of the vehicle 120, and therefore, the seat corresponding to the overlapping area 1032 is the seat corresponding to the rear right door.

At step S350, it is detected whether an occupant is on the seat corresponding to the overlapping area.

In this example, after the seat corresponding to the overlapping area is determined, it can be detected whether the occupant is on the seat corresponding to the overlapping area, so that it can be more accurately determined whether a possibility of opening a door corresponding to the overlapping area exists, and thus it can be more accurately determined whether a risk of collision exists for opening the door of the vehicle.

In some examples, a camera can be arranged in the vehicle, and it may be determined whether the occupant is on the seat corresponding to the overlapping area using the camera in the vehicle. Specifically, when it is determined that the overlapping area exists between the contour range and the door opening/closing range, an image captured by the camera in the vehicle can be obtained. By performing an identification on the image, it can be determined whether the occupant is in the image, and it can be further determined whether the occupant is located on the seat corresponding to the overlapping area when it is determined that the occupant is in the image. When it is determined by performing the identification on the image that the occupant is in the image and the occupant is located on the seat corresponding to the overlapping area, it can indicate that the occupant is on the seat corresponding to the overlapping area.

In some examples, a pressure sensor may be arranged on the seat of the vehicle, and the pressure sensor may be used to detect whether the occupant is on the seat corresponding to the overlapping area. Specifically, the pressure sensor for each seat can have a unique identifier. After the seat corresponding to the overlapping area is determined, the identifier of the pressure sensor corresponding to the seat can be obtained. Then, pressure data detected by the pressure sensor can be obtained, and it can be determined whether the occupant is on the seat based on the pressure data detected by the pressure sensor. In an example, a pressure data threshold can be set. When the pressure data detected by the pressure sensor is greater than the pressure data threshold, it can be determined that the occupant is on the seat corresponding to the pressure sensor.

At step S360, when the occupant is on the seat corresponding to the overlapping area, it is determined that a risk of collision exists for opening a door corresponding to the overlapping area, and a corresponding risk warning is determined.

In this example, when the occupant is on the seat corresponding to the overlapping area, it indicates that a possibility of opening the door corresponding to the overlapping area exists. Therefore, it can be determined that the risk of collision exists for opening the door corresponding to the overlapping area, and the corresponding risk warning is determined.

In some examples, when the occupant is on the seat corresponding to the overlapping area, it can be further detected whether the occupant has an intention to open the door, so that it can be more accurately determined whether the risk of collision exists for opening the door corresponding to the overlapping area. As an example, a sensor can be arranged in a door handle inside the vehicle, data detected by the sensor in the door handle corresponding to the seat which the occupant is on can be obtained, and it can be determined whether the occupant has an intention to open the door based on the data detected by the sensor. When the data detected by the sensor is greater than a predetermined data threshold, it can indicate that a hand of the occupant is on the door handle, which means that the occupant has the intention to open the door. Then, it can be determined that the risk of collision exists for opening the door corresponding to the overlapping area. As another example, it can be detected whether the occupant has the intention to open the door by detecting whether a seat belt of the occupant on the seat corresponding to the overlapping area is released. Specifically, it can be determined whether the seat belt is released by detecting whether a bolt of the seat belt is inserted into a buckle of the seat belt. When it is detected that the bolt of the seat belt is inserted into the buckle, it can indicate that the seat belt is not released; and when it is detected that the bolt of the seat belt is not inserted into the buckle, it can indicate that the seat belt is released. When it is detected that the seat belt of the occupant on the seat corresponding to the overlapping area is released, it can indicate that the occupant has the intention to open the door, and then it can be determined that the risk of collision exists for opening the door corresponding to the overlapping area.

In some examples, when no occupant is on the seat corresponding to the overlapping area, it can be determined that no risk of collision exists for opening the door corresponding to the overlapping area, and therefore, it is not necessary to determine the corresponding risk warning.

Compared with the vehicle door-opening anti-collision method in FIG. 1, in the vehicle door-opening anti-collision method according to the above example, it is additionally detected whether the occupant is on the seat corresponding to the overlapping area when the overlapping area exists between the contour range of the obstacle and the door opening/closing range. When the occupant is on the seat corresponding to the overlapping area, it can be determined that the risk of collision exists for opening the door corresponding to the overlapping area. Therefore, by detecting whether the occupant is on the seat corresponding to the overlapping area, it can be more accurately determined whether the risk of collision exists for opening the door of the vehicle.

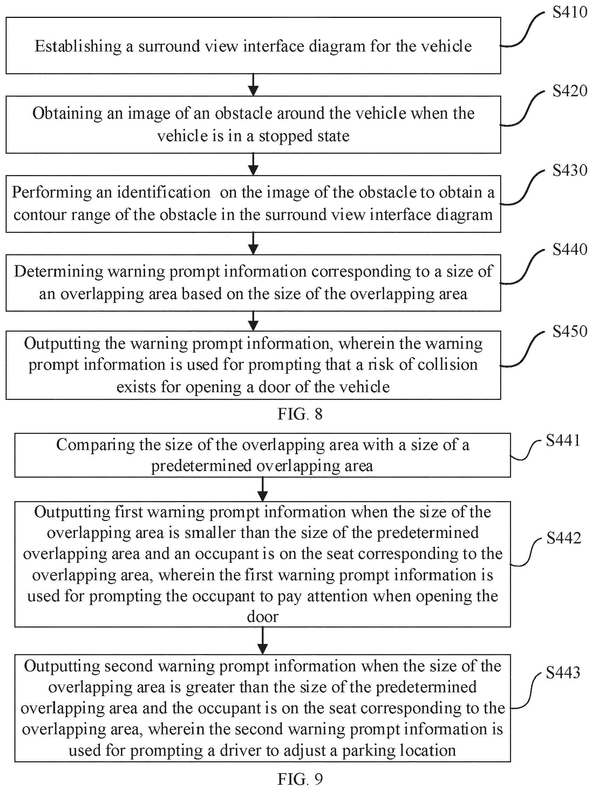

Please referring to FIG. 8, FIG. 8 is a schematic flowchart of another vehicle door-opening anti-collision method according to the present invention. The flow illustrated in FIG. 8 will be described in detail below. The method includes step S410 to step S450.

At step S410, a surround view interface diagram for the vehicle is established.

At step S420, when the vehicle is in a stopped state, an image of an obstacle around the vehicle is obtained.

At step S430, an identification is performed on the image of the obstacle to obtain a contour range of the obstacle in the surround view interface diagram.

For the specific description of step S410 to step S430, reference can be made to step S 110 to step S130, which will not be repeated here.

At step S440, based on a size of an overlapping area, warning prompt information corresponding to the size of the overlapping area is determined.

For a different size of the overlapping area, the risk of collision may differ. For example, when the overlapping area between the contour range of the obstacle and a door opening/closing range is relatively small, it can be considered that the risk of collision between the vehicle and the obstacle is relatively small; and when the overlapping area is relatively large, it can be considered that the risk of collision between the vehicle and the obstacle is relatively large. Therefore, in this example, the warning prompt information corresponding to the size of the overlapping area can be determined based on the size of the overlapping area, so as to provide suitable warning prompt information for different risks of collision. An area size of the overlapping area can be calculated and used as the size of the overlapping area, or a ratio of the area size of the overlapping area to an area size of the door opening/closing range can be calculated and used as the size of the overlapping area. The specific implementation is not limited here.

Please referring to FIG. 9, FIG. 9 illustrates a schematic flowchart of step S440 in a vehicle door-opening anti-collision method according to the present invention. The method includes step S441 to step S443.

At step S441, the size of the overlapping area is compared with a size of a predetermined overlapping area.

According to the invention, the size of the overlapping area can be compared with the size of the predetermined overlapping area. In some examples, the predetermined overlapping area may correspond to an extreme situation where an occupant inside the vehicle can just get off the vehicle when opening a door under the condition that the door is controlled not to collide with the obstacle, That is, if the size of the overlapping area is greater than the size of the predetermined overlapping area, when the occupant opens the door under the condition that the door is controlled not to collide with the obstacle, an opening angle of the door is relatively small such that the occupant in the vehicle cannot get off. If the size of the overlapping area is smaller than the size of the predetermined overlapping area, when the occupant opens the door under the condition that the door is controlled not to collide with the obstacle, the opening angle of the door is relatively large such that the occupant in the vehicle can get off. The predetermined overlapping area can be set by a system based on the door opening/closing range or can be set by a user, which is not limited here.

According to the invention, the size of the overlapping area can be expressed by the area size of the overlapping area in the surround view interface diagram. Therefore, the area size of the overlapping area can be compared with the area size of the predetermined overlapping area, so that the corresponding warning prompt information can be determined based on a size relation between the area size of the overlapping area and the area size of the predetermined overlapping area. When the size of the overlapping area is the ratio of the area size of the overlapping area to the area size of the door opening/closing range, the ratio of the area size of the overlapping area to the area size of the door opening/closing range can be compared with a ratio of the area size of the predetermined overlapping area to the area size of the door opening/closing range, to determine the corresponding warning prompt information based on a size relation between the ratios.

At step S442, when the size of the overlapping area is smaller than the size of the predetermined overlapping area and an occupant is on the seat corresponding to the overlapping area, first warning prompt information is output. The first warning prompt information is used for prompting the occupant to pay attention when opening the door.

In this example, when the size of the overlapping area is smaller than the size of the predetermined overlapping area and the occupant is on the seat corresponding to the overlapping area, it can indicate that the occupant can get off the vehicle when opening the door under the condition that the door is controlled not to collide with the obstacle. Therefore, the first warning prompt information can be output to prompt the occupant to pay attention when opening the door.

At step S443, when the size of the overlapping area is greater than the size of the predetermined overlapping area and the occupant is on the seat corresponding to the overlapping area, second warning prompt information is output. The second warning prompt information is used for prompting a driver to adjust a parking location.

In this example, when the size of the overlapping area is greater than the size of the predetermined overlapping area and the occupant is on the seat corresponding to the overlapping area, it can indicate that the occupant in the vehicle cannot get off when opening the door under the condition that the door is controlled not to collide with the obstacle. Therefore, the second warning prompt information can be output to prompt the driver to adjust the parking location so that the occupant in the vehicle can get off the vehicle normally.

In some examples, it can also be determined whether the door corresponding to the occupant can be used to get off. When it is determined that the door corresponding to the occupant cannot be used to get off, overlapping areas between door opening/closing ranges of other doors and the contour range of the obstacle can be determined. A candidate door can be determined from the other doors, based on the overlapping areas between the door opening/closing ranges of the other doors and the contour range of the obstacle as well as a position relation between the other doors and the door corresponding to the occupant. The candidate door can refer to another door that can be used to get off and meets a predetermined position relation. Then, the occupant can be prompted to choose to get off from the candidate door. Specifically, when the size of the overlapping area is greater than the size of the predetermined overlapping area and the occupant is on the seat corresponding to the overlapping area, the occupant cannot get off from the door corresponding to the overlapping area at this time. Then, it can be determined whether the overlapping areas exist between the door opening/closing ranges of other doors and the contour range of the obstacle. The predetermined position relation can refer to the other side door opposite to the door corresponding to the occupant. It is determined whether the overlapping area exists between the door opening/closing range of the other side door and the contour range of the obstacle. When no overlapping area exists between the door opening/closing range of the other side door and the contour range of the obstacle, it can indicate that no risk of collision exists for opening the other side door, and therefore the occupant can be prompted to get off from the other side door. For example, referring to Fig. 6, when the size of the overlapping area 1032 is greater than the size of the predetermined overlapping area and occupant A is on the rear right seat corresponding to the overlapping area 1032, occupant A cannot get off from the rear right door. At this time, it can be determined whether the rear left door is at the risk of collision, and when the rear left door is not at the risk of collision, occupant A can be prompted to get off from the rear left door.

Further, when the size of the overlapping area is greater than the size of the predetermined overlapping area and the occupant is on the seat corresponding to the overlapping area, if the door corresponding to the overlapping area is a door corresponding to a driver seat, the driver may be prompted to adjust the parking location.

At step S450, the warning prompt information is output. The warning prompt information is used for prompting that a risk of collision exists for opening a door of the vehicle.

When the overlapping area exists between the contour range of the obstacle and the door opening/closing range, it can be determined that the risk of collision exists for opening the door, and a corresponding risk warning can be determined. The risk warning can prompt that the risk of collision exists for opening the door. Therefore, in this example, the warning prompt information can be output, and the warning prompt information is used for prompting that the risk of collision exists for opening the door.

In some examples, the warning prompt information may be output in a form of voice. Specifically, the voice of the warning prompt information can be played through an audio playing apparatus in the vehicle. The audio playing apparatus can include a speaker, an acoustic apparatus, etc. For example, the warning prompt information "Please pay attention when opening the door" can be played through the speaker in the vehicle to prompt that the risk of collision exists for opening the door.

In some examples, the warning prompt information can also be displayed on a central control screen of the vehicle. Specifically, the surround view interface diagram is displayed on the central control screen of the vehicle, the door which is at the risk of collision can be marked in the surround view interface diagram, and the user is warned by a different color, so that the user can learn which door is at the risk of collision directly by watching the surround view interface diagram on the central control screen.

Compared with the vehicle door-opening anti-collision method in FIG. 1, in the vehicle door-opening anti-collision method provided in the above example, the warning prompt information can be additionally output to prompt that the risk of collision exists for opening the door, thereby avoiding unnecessary economic losses of the user by giving a warning in advance.

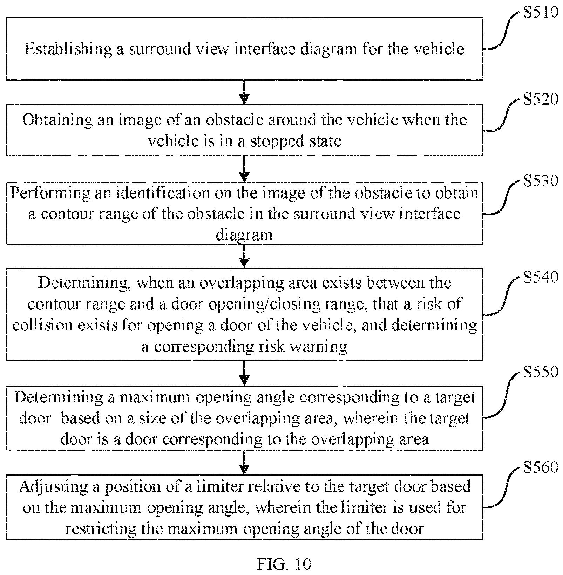

Please referring to FIG. 10, FIG. 10 is a schematic flowchart illustrating another vehicle door-opening anti-collision method according to an example of the present disclosure. The flow illustrated in FIG. 10 will be described in detail below. The method may specifically include the following steps S510 to S560.

At step S510, a surround view interface diagram for the vehicle is established.

At step S520, when the vehicle is in a stopped state, an image of an obstacle around the vehicle is obtained.

At step S530, an identification is performed on the image of the obstacle to obtain a contour range of the obstacle in the surround view interface diagram.

At step S540, when an overlapping area exists between the contour range and a door opening/closing range, it is determined that a risk of collision exists for opening a door of the vehicle, and a corresponding risk warning is determined.

For the specific description of step S510 to step S540, reference can be made to step S 110 to step S 140, which will not be repeated here.

At step S550, a maximum opening angle corresponding to a target door is determined based on a size of the overlapping area. The target door is a door corresponding to the overlapping area.

In this example, the vehicle may be provided with a limiter. The maximum opening angle of the door can be restricted by controlling the limiter, so as to avoid that an occupant collides with the obstacle when opening the door and reduce the risk of collision for opening the door. Specifically, the maximum opening angle corresponding to the target door may be determined based on a size of the overlapping area. The target door is the door corresponding to the overlapping area.

In some examples, a correspondence between sizes of the overlapping area and maximum opening angles of the door may be predetermined, the size of the overlapping area is obtained, and the maximum opening angle corresponding to the target door is determined based on the correspondence. Further, the maximum opening angle corresponding to the target door can also be calculated based on the size of the overlapping area. Specifically, a maximum distance between the vehicle and the obstacle can be determined based on the size of the overlapping area and the door opening/closing range, and the maximum opening angle of the target door is calculated based on the maximum distance between the vehicle and the obstacle.

At step S560, a position of the limiter relative to the target door is adjusted based on the maximum opening angle. The limiter is used for restricting the maximum opening angle of the door.

In this example, the position of the limiter relative to the target door can be adjusted based on an opening angle, thereby restricting the maximum opening angle of the target door. Specifically, the limiter is movable relative to the door. A correspondence between opening angles and positions of the limiter can be predetermined, and the position of the limiter relative to the target door can be determined by obtaining the above-determined maximum opening angle and looking up the correspondence between the opening angles and the positions of the limiter. Then, the limiter can be moved to a corresponding position to restrict the maximum opening angle of the target door, thereby preventing the target door from colliding with the obstacle when opening the door.

Compared with the vehicle door-opening anti-collision method illustrated in FIG. 1, in the vehicle door-opening anti-collision method provided by the foregoing example, the vehicle is additionally provided with the limiter, the maximum opening angle corresponding to the door at the risk of collision is determined based on the size of the overlapping area, and the position of the limiter relative to the door is adjusted based on the opening angle. In this way, the limiter can be used to restrict the maximum opening angle of the door to reduce the risk of collision for opening the door, thereby avoiding unnecessary economic losses for the user.

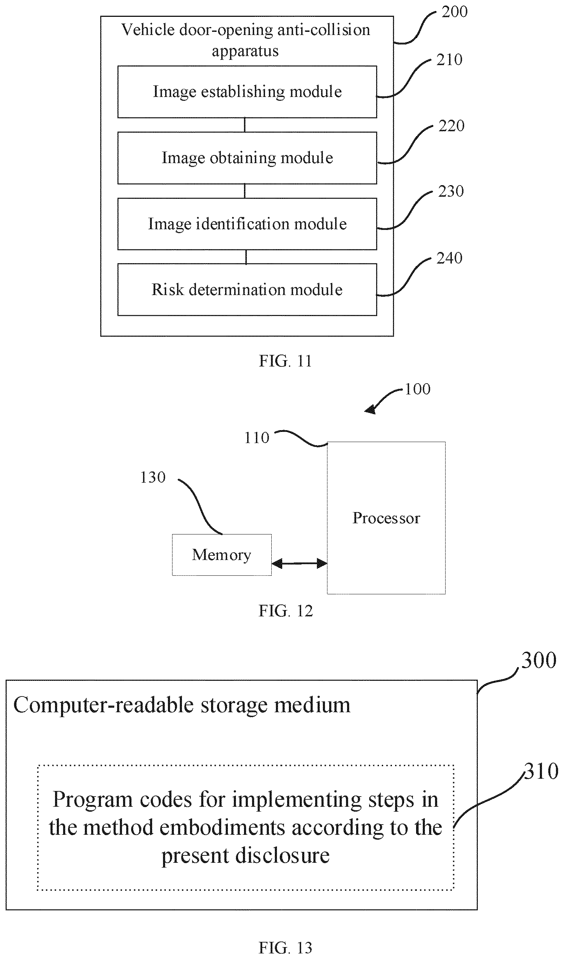

Please referring to FIG. 11, FIG. 11 illustrates a block diagram of a vehicle door-opening anti-collision apparatus 200 according to an example of the present disclosure. The block diagram of FIG. 11 will be elaborated below. The vehicle door-opening anti-collision apparatus 200 includes: an image establishing module 210, an image obtaining module 220, an image identification module 230, and a risk determination module 240.

The image establishing module 210 is configured to establish a surround view interface diagram for the vehicle.

The image obtaining module 220 is configured to obtain an image of an obstacle around the vehicle when the vehicle is in a stopped state.

The image identification module 230 is configured to perform an identification on the image of the obstacle to obtain a contour range of the obstacle.

Further, the image identification module 230 includes an image identification sub-module and a range marking sub-module.

The image identification sub-module is configured to perform the identification on the image of the obstacle to obtain contour information of the obstacle.

The range marking sub-module is configured to mark the contour range of the obstacle in the surround view interface diagram based on the contour information.

The risk determination module 240 is configured to determine, when an overlapping area exists between the contour range and a door opening/closing range, that a risk of collision exists for opening a door of the vehicle and determine a corresponding risk warning.

Further, the risk determination module 240 includes a range comparison sub-module and a first risk determination sub-module.

The range comparison sub-module is configured to compare the contour range with a position range to determine whether the overlapping area exists between the contour range and the position range.

The first risk determination sub-module is configured to determine, when the overlapping area exists between the contour range and the position range, that the risk of collision exists for opening the door of the vehicle and determine the corresponding risk warning.

Further, the risk determination module 240 further includes a seat determination sub-module, an occupant detection sub-module, and a second risk determination sub-module.

The seat determination sub-module is configured to determine a seat corresponding to the overlapping area based on the overlapping area when the overlapping area exists between the contour range and the door opening/closing range.

The occupant detection sub-module is configured to detect whether an occupant is on the seat corresponding to the overlapping area.

The second risk determination sub-module is configured to determine, when the occupant is on the seat corresponding to the overlapping area, that a risk of collision exists for opening a door corresponding to the overlapping area and determine a corresponding risk warning.

Further, the vehicle door-opening anti-collision apparatus 200 further includes a range marking module.

The range marking module is configured to mark a position range of the door opening/closing range in the surround view interface diagram based on the door opening/closing range of the vehicle.

Further, the vehicle door-opening anti-collision apparatus 200 further includes an information output module.

The information output module is configured to output warning prompt information. The warning prompt information is used for prompting that the risk of collision exists for opening the door of the vehicle.

Further, the information output module includes an information determination sub-module.

The information determination sub-module is configured to determine warning prompt information corresponding to a size of the overlapping area based on the size of the overlapping area.

Further, the information determination sub-module includes a size comparison unit, a first information output unit, and a second information output unit.

The size comparison unit is configured to compare the size of the overlapping area with a size of a predetermined overlapping area.

The first information output unit is configured to output first warning prompt information when the size of the overlapping area is smaller than the size of the predetermined overlapping area and an occupant is on a seat corresponding to the overlapping area. The first warning prompt information is used for prompting the occupant to pay attention when opening the door.

The second information output unit is configured to output second warning prompt information when the size of the overlapping area is greater than the size of the predetermined overlapping area and the occupant is on the seat corresponding to the overlapping area. The second warning prompt information is used for prompting a driver to adjust a parking location.

Further, a limiter is provided on the door of the vehicle, and the vehicle door-opening anti-collision apparatus 200 further includes an angle determination module and a position adjustment module.

The angle determination module is configured to determine a maximum opening angle corresponding to a target door based on the size of the overlapping area. The target door is a door corresponding to the overlapping area.

The position adjustment module is configured to adjust a position of the limiter relative to the target door based on the opening angle. The limiter is used for restricting the maximum opening angle of the door.

Those skilled in the art can clearly understand that, for the sake of convenience and conciseness of the description, for the specific operating process of the apparatus and modules described above, reference can be made to the corresponding process in the foregoing method example, which will not be repeated here.

In the several examples provided by the present disclosure, coupling between the modules may be electrical, mechanical or other forms of coupling.

In addition, the functional modules in the various examples of the present disclosure may be integrated into one processing module or be separate physical modules, or two or more modules may be integrated into one module. The above-mentioned integrated modules can be implemented in the form of hardware or software functional modules.

Please referring to FIG. 12, FIG. 12 illustrates a structural block diagram of a vehicle 100 according to an example of the present disclosure. The vehicle 100 in the present disclosure may include one or more of a processor 110, a memory 130, and one or more application programs. The one or more application programs are stored in the memory 130 and configured to be executed by the one or more processors 110, and the one or more programs are configured to implement the method described in the foregoing method examples.

The processor 110 may include one or more processing cores. The processor 110 uses various interfaces and lines to connect various parts in the entire vehicle 100, and implements various functions and processes data of the vehicle 100 by running or executing instructions, programs, code sets, or instruction sets stored in the memory 130 and calling data stored in the memory 130. Optionally, the processor 110 may be implemented in at least one hardware form of a digital signal processing (DSP), a field-programmable gate array (FPGA), and a programmable logic array (PLA). The processor 110 may be integrated with one or a combination of several of a central processing unit (CPU), a graphics processing unit (GPU), and a modem. The CPU mainly processes an operating system, a user interface, and the application programs; the GPU is used for rendering and drawing of display content; and the modem is used for processing wireless communication. It can be understood that the above-mentioned modem may not be integrated into the processor 110, but may be implemented by a separate communication chip.

The memory 130 may include a random access memory (RAM), and may also include a read-only memory (ROM). The memory 130 may be configured to store instructions, programs, codes, code sets or instruction sets. The memory 130 may include a program storage area and a data storage area. The program storage area may store instructions for implementing the operating system, instructions for implementing at least one function (such as a touch function, a sound playing function, an image playing function, etc.), instructions used for implementing the following various method examples, etc. The data storage area can also store data created during use of the vehicle 100 (such as a phone book, audio and video data, chat record data), and the like.

Please referring to FIG. 13, FIG. 13 illustrates a structural block diagram of a computer-readable storage medium according to an example of the present disclosure. The computer-readable storage medium 300 has program codes stored thereon. The program codes, when invoked by a processor, implement the method described in the foregoing method examples.

The computer-readable storage medium 300 may be an electronic memory such as a flash memory, an electrically erasable programmable read only memory (EEPROM), an erasable programmable read only memory (EPROM), a hard disk, or a ROM. Optionally, the computer-readable storage medium 300 includes a non-transitory computer-readable storage medium. The computer-readable storage medium 300 has a storage space for program codes 310 for implementing any method step in the above-mentioned method. These program codes can be read from or written into one or more computer program products. The program codes 310 may be compressed in a suitable form, for example.

In summary, in a vehicle door-opening anti-collision method and apparatus, a vehicle, and a storage medium according to examples of the present disclosure, a surround view interface diagram for the vehicle is established; an image of an obstacle around the vehicle is obtained when the vehicle is in a stopped state; an identification is performed on the image of the obstacle to obtain a contour range of the obstacle in the surround view interface diagram; and it is determined, when an overlapping area exists between the contour range and a door opening/closing range, that a risk of collision exists for opening a door of the vehicle and a corresponding risk warning is determined. In this way, by determining whether the overlapping area exists between the contour range of the obstacle around the vehicle and the door opening/closing range, it is determined whether the risk of collision exists for opening the door of the vehicle, thereby reducing the risk of collision for opening the door of the vehicle.

Finally, it should be noted that the above examples are only used to illustrate the technical solutions according to the present disclosure rather than limiting them.

## Claims

1. A vehicle door-opening anti-collision method, comprising:
establishing (S210, S310, S410, S510) a surround view interface diagram for the vehicle;
obtaining (S230, S320, S420, S520) an image of an obstacle around the vehicle when the vehicle is in a stopped state;
performing (S330, S430, S530) an identification on the image of the obstacle to obtain a contour range of the obstacle in the surround view interface diagram; and
determining, when an overlapping area exists between the contour range and a door opening/closing range, that a risk of collision exists for opening a door of the vehicle and determining a corresponding risk warning (S540),
wherein said determining, when the overlapping area exists between the contour range and the door opening/closing range, that the risk of collision exists for opening the door of the vehicle and determining the corresponding risk warning comprises: determining (S440) warning prompt information corresponding to a size of the overlapping area based on the size of the overlapping area; and outputting (S450) the warning prompt information, wherein the warning prompt information is used for prompting that a risk of collision exists for opening the door of the vehicle,
**characterized in that**,
said determining (S440) the warning prompt information corresponding to the size of the overlapping area based on the size of the overlapping area comprises: comparing (S441) the size of the overlapping area with a size of a predetermined overlapping area; and outputting (S442) first warning prompt information when the size of the overlapping area is smaller than the size of the predetermined overlapping area and an occupant is on a seat corresponding to the overlapping area, wherein the first warning prompt information is used for prompting the occupant to pay attention when opening the door, and
the method further comprises, subsequent to said comparing (S441) the size of the overlapping area with the size of the predetermined overlapping area: outputting (S443) second warning prompt information when the size of the overlapping area is greater than the size of the predetermined overlapping area and the occupant is on the seat corresponding to the overlapping area, wherein the second warning prompt information is used for prompting a driver to adjust a parking location.

2. The method according to claim 1, further comprising, subsequent to said establishing (S210) the surround view interface diagram for the vehicle:
marking (S220) a position range of the door opening/closing range in the surround view interface diagram based on the door opening/closing range of the vehicle,
wherein said performing the identification on the image of the obstacle to obtain the contour range of the obstacle in the surround view interface diagram comprises:
performing (S240) the identification on the image of the obstacle to obtain contour information of the obstacle; and
marking (S250) the contour range of the obstacle in the surround view interface diagram based on the contour information.

3. The method according to claim 2, wherein said determining, when the overlapping area exists between the contour range and the door opening/closing range, that the risk of collision exists for opening the door of the vehicle and determining the corresponding risk warning comprises:
comparing (S260) the contour range with the position range to determine whether an overlapping area exists between the contour range and the position range; and
determining, when the overlapping area exists between the contour range and the position range, that a risk of collision exists for opening the door of the vehicle, and determining a corresponding risk warning (S270).

4. The method according to claim 1, wherein said determining, when the overlapping area exists between the contour range and the door opening/closing range, that the risk of collision exists for opening the door of the vehicle and determining the corresponding risk warning comprises:
when the overlapping area exists between the contour range and the door opening/closing range, determining (S340) a seat corresponding to the overlapping area based on the overlapping area;
detecting (S350) whether an occupant is on the seat corresponding to the overlapping area; and
determining, when the occupant is on the seat corresponding to the overlapping area, that a risk of collision exists for opening a door corresponding to the overlapping area and determining a corresponding risk warning (S360).

5. The method according to any one of claims 1 to 4, wherein a limiter is provided on the door of the vehicle, and subsequent to said determining, when the overlapping area exists between the contour range and the door opening/closing range, that the risk of collision exists for opening the door of the vehicle and determining the corresponding risk warning (S540), the method further comprises:
determining (S550) a maximum opening angle corresponding to a target door based on a size of the overlapping area, wherein the target door is a door corresponding to the overlapping area; and
adjusting (S560) a position of the limiter relative to the target door based on the maximum opening angle, wherein the limiter is used for restricting the maximum opening angle of the door.

6. A vehicle door-opening anti-collision apparatus, comprising:
an image establishing module (210) configured to establish a surround view interface diagram for the vehicle;
an image obtaining module (220) configured to obtain an image of an obstacle around the vehicle when the vehicle is in a stopped state;
an image identification module (230) configured to perform identification on the image of the obstacle to obtain a contour range of the obstacle in the surround view interface diagram; and
a risk determination module (240) configured to determine, when an overlapping area exists between the contour range and a door opening/closing range, that a risk of collision exists for opening a door of the vehicle and determine a corresponding risk warning,
wherein the apparatus further comprises an information output module, wherein the information output module comprises an information determination sub-module configured to determine warning prompt information corresponding to a size of the overlapping area based on the size of the overlapping area, and wherein the information output module is configured to output the warning prompt information, wherein the warning prompt information is used for prompting that a risk of collision exists for opening the door of the vehicle,
**characterized in that**,
the information determination sub-module comprises:
a size comparison unit configured to compare the size of the overlapping area with a size of a predetermined overlapping area,
a first information output unit configured to output first warning prompt information when the size of the overlapping area is smaller than the size of the predetermined overlapping area and an occupant is on a seat corresponding to the overlapping area, wherein the first warning prompt information is used for prompting the occupant to pay attention when opening the door, and
a second information output unit configured to output second warning prompt information when the size of the overlapping area is greater than the size of the predetermined overlapping area and the occupant is on the seat corresponding to the overlapping area, wherein the second warning prompt information is used for prompting a driver to adjust a parking location.

7. The apparatus according to claim 6, further comprising:
a range marking module configured to mark a position range of the door opening/closing range in the surround view interface diagram based on the door opening/closing range of the vehicle,
wherein the image identification module comprises:
an image identification sub-module configured to perform the identification on the image of the obstacle to obtain contour information of the obstacle; and
a range marking sub-module configured to mark the contour range of the obstacle in the surround view interface diagram based on the contour information.

8. The apparatus according to claim 6, wherein the risk determination module comprises:
a seat determination sub-module configured to determine a seat corresponding to the overlapping area based on the overlapping area when the overlapping area exists between the contour range and the door opening/closing range;
an occupant detection sub-module configured to detect whether an occupant is on the seat corresponding to the overlapping area; and
a second risk determination sub-module configured to determine, when the occupant is on the seat corresponding to the overlapping area, that a risk of collision exists for opening a door corresponding to the overlapping area and determine a corresponding risk warning.

9. The apparatus according to any one of claims 6 to 8, wherein a limiter is provided on the door of the vehicle, and the apparatus further comprises:
an angle determination module configured to determine a maximum opening angle corresponding to a target door based on a size of the overlapping area, wherein the target door is a door corresponding to the overlapping area; and
a position adjustment module configured to adjust a position of the limiter relative to the target door based on the maximum opening angle, wherein the limiter is used for restricting the maximum opening angle of the door.

10. A vehicle, comprising:
one or more processors (110);
a memory (120); and
one or more programs stored in the memory (120) and configured to be executed by the one or more processors (110),
**characterized in that**,
the one or more programs are configured to implement the method according to any one of claims 1 to 5.

11. A computer-readable storage medium, having program codes (310) stored thereon, **characterized in that**,
the program codes (310), when invoked by a processor, implement the method according to any one of claims 1 to 5.

## Patentansprüche

1. Kollisionsschutzverfahren für sich öffnende Fahrzeugtüren, das Folgendes beinhaltet:
Erstellen (S210, S310, S410, S510) eines Rundumsicht-Schnittstellendiagramms für das Fahrzeug;
Erhalten (S230, S320, S420, S520) eines Bildes eines Hindernisses um das Fahrzeug herum, wenn das Fahrzeug im Anhaltezustand ist;
Durchführen (S330, S430, S530) einer Identifikation an dem Bild des Hindernisses, um eine Konturreichweite des Hindernisses in dem Rundumsicht-Schnittstellendiagramm zu erhalten; und
Bestimmen, wenn ein Überlappungsbereich zwischen der Konturreichweite und einer Türöffnungs-/-schließreichweite existiert, dass ein Kollisionsrisiko für das Öffnen einer Tür des Fahrzeugs existiert, und Bestimmen einer entsprechenden Risikowarnung (S540),
wobei das genannte Bestimmen, wenn der Überlappungsbereich zwischen der Konturreichweite und der Türöffnungs-/-schließreichweite existiert, dass das Kollisionsrisiko für das Öffnen der Tür des Fahrzeugs existiert, und das Bestimmen der entsprechenden Risikowarnung Folgendes beinhaltet: Bestimmen (S440) einer Warnhinweisinformation entsprechend einer Größe des Überlappungsbereichs auf der Basis der Größe des Überlappungsbereichs; und Ausgeben (S450) der Warnhinweisinformation, wobei die Warnhinweisinformation zum Hinweisen darauf benutzt wird, dass ein Kollisionsrisiko für das Öffnen der Tür des Fahrzeugs besteht,
**dadurch gekennzeichnet, dass**
das genannte Bestimmen (S440) der Warnhinweisinformation entsprechend der Größe des Überlappungsbereichs auf der Basis der Größe des Überlappungsbereichs Folgendes beinhaltet: Vergleichen (S441) der Größe des Überlappungsbereichs mit einer Größe eines vorbestimmten Überlappungsbereichs; und Ausgeben (S442) einer ersten Warnhinweisinformation, wenn der Überlappungsbereich kleiner ist als der vorbestimmte Überlappungsbereich und sich ein Insasse auf einem Sitz befindet, der dem Überlappungsbereich entspricht, wobei die erste Warnhinweisinformation zum Auffordern des Insassen benutzt wird, beim Öffnen der Tür aufzupassen, und
das Verfahren ferner im Anschluss an das genannte Vergleichen (S441) der Größe des Überlappungsbereichs mit der Größe des vorbestimmten Überlappungsbereichs Folgendes beinhaltet: Ausgeben (S443) einer zweiten Warnhinweisinformation, wenn der Überlappungsbereich größer ist als der vorbestimmte Überlappungsbereich und der Insasse sich auf dem Sitz befindet, der dem Überlappungsbereich entspricht, wobei die zweite Warnhinweisinformation zum Auffordern eines Fahrers benutzt wird, eine Parkposition einzustellen.

2. Verfahren nach Anspruch 1, das ferner im Anschluss an das genannte Erstellen (S210) des Rundumsicht-Schnittstellendiagramms für das Fahrzeug Folgendes beinhaltet:
Markieren (S220) einer Positionsreichweite der Türöffnungs-/-schließreichweite in dem Rundumsicht-Schnittstellendiagramm auf der Basis der Türöffnungs-/-schließreichweite des Fahrzeugs,
wobei das genannte Durchführen der Identifikation an dem Bild des Hindernisses, um die Konturreichweite des Hindernisses in dem Rundumsicht-Schnittstellendiagramm zu erhalten, Folgendes beinhaltet:
Durchführen (S240) der Identifikation an dem Bild des Hindernisses, um Konturinformationen über das Hindernis zu erhalten; und
Markieren (S250) der Konturreichweite des Hindernisses in dem Rundumsicht-Schnittstellendiagramm auf der Basis der Konturinformationen.

3. Verfahren nach Anspruch 2, wobei das genannte Bestimmen, wenn der Überlappungsbereich zwischen der Konturreichweite und der Türöffnungs-/- schließreichweite existiert, dass das Kollisionsrisiko für das Öffnen der Tür des Fahrzeugs besteht, und das Bestimmen der entsprechenden Risikowarnung Folgendes beinhaltet:
Vergleichen (S260) der Konturreichweite mit der Positionsreichweite, um zu bestimmen, ob ein Überlappungsbereich zwischen der Konturreichweite und der Positionsreichweite existiert; und
Bestimmen, wenn der Überlappungsbereich zwischen der Konturreichweite und der Positionsreichweite existiert, dass ein Kollisionsrisiko für das Öffnen der Tür des Fahrzeugs existiert, und Bestimmen einer entsprechenden Risikowarnung (S270).

4. Verfahren nach Anspruch 1, wobei das genannte Bestimmen, wenn der Überlappungsbereich zwischen der Konturreichweite und der Türöffnungs-/- schließreichweite existiert, dass die Kollisionsgefahr für das Öffnen der Fahrzeugtür existiert, und das Bestimmen der entsprechenden Risikowarnung Folgendes beinhaltet:
Bestimmen (S340), wenn der Überlappungsbereich zwischen der Konturreichweite und der Türöffnungs-/-schließreichweite existiert, eines dem Überlappungsbereich entsprechenden Sitzes auf der Basis des Überlappungsbereichs;
Erkennen (S350), ob sich ein Insasse auf dem dem Überlappungsbereich entsprechenden Sitz befindet; und
Bestimmen, wenn sich der Insasse auf dem dem Überlappungsbereich entsprechenden Sitz befindet, dass ein Kollisionsrisiko für das Öffnen einer dem Überlappungsbereich entsprechenden Tür existiert, und Bestimmen einer entsprechenden Risikowarnung (S360).

5. Verfahren nach einem der Ansprüche 1 bis 4, wobei ein Begrenzer an der Tür des Fahrzeugs vorgesehen ist, und nach dem genannten Bestimmen, wenn der Überlappungsbereich zwischen der Konturreichweite und der Türöffnungs-/- schließreichweite existiert, dass das Kollisionsrisiko für das Öffnen der Tür des Fahrzeugs existiert, und dem Bestimmen der entsprechenden Risikowarnung (S540) das Verfahren ferner Folgendes beinhaltet:
Bestimmen (S550) eines maximalen Öffnungswinkels, der einer Zieltür entspricht, auf der Basis einer Größe des Überlappungsbereichs, wobei die Zieltür eine Tür ist, die dem Überlappungsbereich entspricht; und
Einstellen (S560) einer Position des Begrenzers relativ zur Zieltür auf der Basis des maximalen Öffnungswinkels, wobei der Begrenzer zum Begrenzen des maximalen Öffnungswinkels der Tür verwendet wird.

6. Kollisionsschutzvorrichtung für sich öffnende Fahrzeugtüren, die Folgendes umfasst:
ein Bilderstellungsmodul (210), konfiguriert zum Erstellen eines Rundumsicht-Schnittstellendiagramms für das Fahrzeug;
ein Bilderhaltungsmodul (220), konfiguriert zum Erhalten eines Bildes eines Hindernisses um das Fahrzeug herum, wenn das Fahrzeug im Anhaltezustand ist;
ein Bildidentifikationsmodul (230), konfiguriert zum Durchführen einer Identifikation an dem Bild des Hindernisses, um eine Konturreichweite des Hindernisses in dem Rundumsicht-Schnittstellendiagramm zu erhalten; und
ein Risikobestimmungsmodul (240), konfiguriert zum Bestimmen, wenn ein Überlappungsbereich zwischen der Konturreichweite und einer Türöffnungs-/- schließreichweite existiert, dass ein Kollisionsrisiko für das Öffnen einer Tür des Fahrzeugs existiert, und zum Bestimmen einer entsprechenden Risikowarnung,
wobei die Vorrichtung ferner ein Informationsausgabemodul umfasst, wobei das Informationsausgabemodul ein Informationsbestimmungssubmodul umfasst, das zum Bestimmen einer Warnhinweisinformation konfiguriert ist, die einer Größe des Überlappungsbereichs entspricht, auf der Basis der Größe des Überlappungsbereichs, und wobei das Informationsausgabemodul zum Ausgeben der Warnhinweisinformation konfiguriert ist, wobei die Warnhinweisinformation zum Hinweisen darauf benutzt wird, dass ein Kollisionsrisiko für das Öffnen der Tür des Fahrzeugs existiert,
**dadurch gekennzeichnet, dass**
das Informationsbestimmungssubmodul Folgendes umfasst:
eine Größenvergleichseinheit, konfiguriert zum Vergleichen der Größe des Überlappungsbereichs mit einer Größe eines vorbestimmten Überlappungsbereichs,
eine erste Informationsausgabeeinheit, konfiguriert zum Ausgeben einer ersten Warnhinweisinformation, wenn der Überlappungsbereich kleiner ist als der vorbestimmte Überlappungsbereich und sich ein Insasse auf einem Sitz befindet, der dem Überlappungsbereich entspricht, wobei die erste Warnhinweisinformation zum Auffordern des Insassen verwendet wird, beim Öffnen der Tür aufzupassen, und
eine zweite Informationsausgabeeinheit, konfiguriert zum Ausgeben einer zweiten Warnhinweisinformation, wenn der Überlappungsbereich größer als der vorbestimmte Überlappungsbereich ist und der Insasse sich auf dem Sitz befindet, der dem Überlappungsbereich entspricht, wobei die zweite Warnhinweisinformation zum Auffordern eines Fahrers benutzt wird, eine Parkposition einzustellen.

7. Vorrichtung nach Anspruch 6, die ferner Folgendes umfasst:
ein Reichweitenmarkierungsmodul, konfiguriert zum Markieren einer Positionsreichweite der Türöffnungs-/-schließreichweite in dem Rundumsicht-Schnittstellendiagramm auf der Basis der Türöffnungs-/-schließreichweite des Fahrzeugs,
wobei das Bildidentifikationsmodul Folgendes umfasst:
ein Bildidentifikationssubmodul, konfiguriert zum Durchführen der Identifikation an dem Bild des Hindernisses, um Konturinformationen über das Hindernis zu erhalten; und
ein Reichweitenmarkierungssubmodul, konfiguriert zum Markieren der Konturreichweite des Hindernisses in dem Rundumsicht-Schnittstellendiagramm auf der Basis der Konturinformationen.

8. Vorrichtung nach Anspruch 6, wobei das Risikobestimmungsmodul Folgendes umfasst:
ein Sitzbestimmungssubmodul, konfiguriert zum Bestimmen eines dem Überlappungsbereich entsprechenden Sitzes auf der Basis des Überlappungsbereichs, wenn der Überlappungsbereich zwischen der Konturreichweite und der Türöffnungs-/- schließreichweite existiert;
ein Insassenerkennungssubmodul, konfiguriert zum Erkennen, ob sich ein Insasse auf dem Sitz befindet, der dem Überlappungsbereich entspricht; und
ein zweites Risikobestimmungssubmodul, konfiguriert zum Bestimmen, wenn sich der Insasse auf dem dem Überlappungsbereich entsprechenden Sitz befindet, dass ein Kollisionsrisiko für das Öffnen einer dem Überlappungsbereich entsprechenden Tür existiert, und zum Bestimmen einer entsprechenden Risikowarnung.

9. Vorrichtung nach einem der Ansprüche 6 bis 8, wobei ein Begrenzer an der Tür des Fahrzeugs vorgesehen ist, und die Vorrichtung ferner Folgendes umfasst:
ein Winkelbestimmungsmodul, konfiguriert zum Bestimmen eines maximalen Öffnungswinkels entsprechend einer Zieltür auf der Basis einer Größe des Überlappungsbereichs, wobei die Zieltür eine Tür ist, die dem Überlappungsbereich entspricht; und
ein Positionseinstellmodul, konfiguriert zum Einstellen einer Position des Begrenzers relativ zu der Zieltür auf der Basis des maximalen Öffnungswinkels, wobei der Begrenzer zum Begrenzen des maximalen Öffnungswinkels der Tür verwendet wird.

10. Fahrzeug, das Folgendes umfasst:
einen oder mehrere Prozessoren (110);
einen Speicher (120); und
ein oder mehrere Programme, die in dem Speicher (120) gespeichert und zum Ausführen durch die ein oder mehreren Prozessoren (110) konfiguriert sind,
**dadurch gekennzeichnet, dass**
die ein oder mehreren Programme zum Implementieren des Verfahrens nach einem der Ansprüche 1 bis 5 konfiguriert sind.

11. Computerlesbares Speichermedium, auf dem Programmcodes (310) gespeichert sind, **dadurch gekennzeichnet, dass**
die Programmcodes (310), wenn sie von einem Prozessor aufgerufen werden, das Verfahren nach einem der Ansprüche 1 bis 5 implementieren.

## Revendications

1. Procédé d'ouverture de porte de véhicule anticollision, comprenant :
un établissement (S210, S310, S410, S510) d'un diagramme d'interface de visualisation des alentours pour le véhicule ;
une obtention (S230, S320, S420, S520) d'une image d'un obstacle autour du véhicule lorsque le véhicule est dans un état arrêté ;
une réalisation (S330, S430, S530) d'une identification sur l'image de l'obstacle pour obtenir une plage de contours de l'obstacle dans le diagramme d'interface de visualisation des alentours ; et
une détermination, lorsqu'une zone de chevauchement existe entre la plage de contours et une plage d'ouverture/fermeture de porte, du fait qu'un risque de collision associé à l'ouverture d'une porte du véhicule existe et une détermination d'un avertissement de risque (S540) correspondant,
dans lequel ladite détermination, lorsque la zone de chevauchement existe entre la plage de contours et la plage d'ouverture/fermeture de porte, du fait que le risque de collision associé à l'ouverture de la porte du véhicule existe et une détermination de l'avertissement de risque correspondant comprend : une détermination (S440) d'informations d'invite d'avertissement correspondant à une dimension de la zone de chevauchement sur la base de la dimension de la zone de chevauchement ; et une émission (S450) des informations d'invite d'avertissement, dans lequel les informations d'invite d'avertissement sont utilisées pour faire remarquer qu'un risque de collision associé à l'ouverture de la porte du véhicule existe, **caractérisé en ce que**
ladite détermination (S440) des informations d'invite d'avertissement correspondant à la dimension de la zone de chevauchement sur la base de la dimension de la zone de chevauchement comprend : une comparaison (S441) de la dimension de la zone de chevauchement avec une dimension d'une zone de chevauchement prédéterminée ; et une émission (S442) de premières informations d'invite d'avertissement lorsque la dimension de la zone de chevauchement est plus petite que la dimension de la zone de chevauchement prédéterminée et qu'un occupant se trouve sur un siège correspondant à la zone de chevauchement, dans lequel les premières informations d'invite d'avertissement sont utilisées pour inciter l'occupant à être vigilant lors de l'ouverture de la porte, et
le procédé comprend en outre, suite à ladite comparaison (S441) de la dimension de la zone de chevauchement avec la dimension de la zone de chevauchement prédéterminée : une émission (S443) de secondes informations d'invite d'avertissement lorsque la dimension de la zone de chevauchement est plus importante que la dimension de la zone de chevauchement prédéterminée et que l'occupant se trouve sur le siège correspondant à la zone de chevauchement, dans lequel les secondes informations d'invite d'avertissement sont utilisées pour inciter le conducteur à ajuster un emplacement de stationnement.

2. Procédé selon la revendication 1, comprenant en outre, suite audit établissement (S210) du diagramme d'interface de visualisation des alentours pour le véhicule :
un marquage (S220) d'une plage de position de la plage d'ouverture/fermeture de porte dans le diagramme d'interface de visualisation des alentours sur la base de la plage d'ouverture/fermeture de porte du véhicule,
dans lequel ladite réalisation de l'identification sur l'image de l'obstacle pour obtenir la plage de contours de l'obstacle dans le diagramme d'interface de visualisation des alentours comprend :
une réalisation (S240) de l'identification sur l'image de l'obstacle pour obtenir des informations de contours de l'obstacle ; et
un marquage (S250) de la plage de contours de l'obstacle dans le diagramme d'interface de visualisation des alentours sur la base des informations de contours.

3. Procédé selon la revendication 2, dans lequel ladite détermination, lorsque la zone de chevauchement existe entre la plage de contours et la plage d'ouverture/fermeture de porte, du fait que le risque de collision associé à l'ouverture de la porte du véhicule existe et une détermination de l'avertissement de risque correspondant comprend :
une comparaison (S260) de la plage de contours avec la plage de position pour déterminer le fait qu'une zone de chevauchement existe ou non entre la plage de contours et la plage de position ; et
une détermination, lorsque la zone de chevauchement existe entre la plage de contours et la plage de position, du fait qu'un risque de collision associé à l'ouverture de la porte du véhicule existe, et une détermination d'un avertissement de risque (S270) correspondant.

4. Procédé selon la revendication 1, dans lequel ladite détermination, lorsque la zone de chevauchement existe entre la plage de contours et la plage d'ouverture/fermeture de porte, du fait que le risque de collision associé à l'ouverture de la porte du véhicule existe et une détermination de l'avertissement de risque correspondant comprend :
lorsque la zone de chevauchement existe entre la plage de contours et la plage d'ouverture/fermeture de porte, une détermination (S340) d'un siège correspondant à la zone de chevauchement sur la base de la zone de chevauchement ;
une détection (S350) du fait qu'un occupant est sur le siège correspondant à la zone de chevauchement ; et
une détermination, lorsque l'occupant est sur le siège correspondant à la zone de chevauchement, du fait qu'un risque de collision associé à l'ouverture d'une porte correspondant à la zone de chevauchement et une détermination d'un avertissement de risque (S360) correspondant.

5. Procédé selon l'une quelconque des revendications 1 à 4, dans lequel un limiteur est fourni sur la porte du véhicule, et suite à ladite détermination, lorsque la zone de chevauchement existe entre la plage de contours et la plage d'ouverture/fermeture de porte, du fait que le risque de collision associé à l'ouverture de la porte du véhicule existe et une détermination de l'avertissement de risque (S540) correspondant, le procédé comprend en outre :
une détermination (S550) d'un angle d'ouverture maximum correspondant à une porte cible sur la base d'une dimension de la zone de chevauchement, dans lequel la porte cible est une porte correspondant à la zone de chevauchement ; et
un ajustement (S560) d'une position du limiteur par rapport à la porte cible sur la base de l'angle d'ouverture maximum, dans lequel le limiteur est utilisé pour restreindre l'angle d'ouverture maximum de la porte.

6. Appareil d'ouverture de porte de véhicule anticollision, comprenant :
un module d'établissement d'image (210) configuré pour établir un diagramme d'interface de visualisation des alentours pour le véhicule ;
un module d'obtention d'image (220) configuré pour obtenir une image d'un obstacle autour du véhicule lorsque le véhicule est dans un état arrêté ;
un module d'identification d'image (230) configuré pour réaliser une identification sur l'image de l'obstacle pour obtenir une plage de contours de l'obstacle dans le diagramme d'interface de visualisation des alentours ; et
un module de détermination de risque (240) configuré pour déterminer, lorsqu'une zone de chevauchement existe entre la plage de contours et une plage d'ouverture/fermeture de porte, le fait qu'un risque de collision associé à l'ouverture d'une porte du véhicule existe et déterminer un avertissement de risque correspondant,
dans lequel l'appareil comprend en outre un module d'émission d'informations, dans lequel le module d'émission d'informations comprend un sous-module de détermination d'informations configuré pour déterminer des informations d'invite d'avertissement correspondant à une dimension de la zone de chevauchement sur la base de la dimension de la zone de chevauchement, et dans lequel le module d'émission d'informations est configuré pour émettre les informations d'invite d'avertissement, dans lequel les informations d'invite d'avertissement sont utilisées pour faire remarquer qu'un risque de collision associé à l'ouverture de la porte du véhicule existe,
**caractérisé en ce que**
le sous-module de détermination d'informations comprend :
une unité de comparaison de dimensions configurée pour comparer la dimension de la zone de chevauchement avec une dimension d'une zone de chevauchement prédéterminée,
une première unité d'émission d'informations configurée pour émettre de premières informations d'invite d'avertissement lorsque la dimension de la zone de chevauchement est plus petite que la dimension de la zone de chevauchement prédéterminée et qu'un occupant se trouve sur un siège correspondant à la zone de chevauchement, dans lequel les premières informations d'invite d'avertissement sont utilisées pour inciter l'occupant à être vigilant lors de l'ouverture de la porte, et
une seconde unité d'émission d'informations configurée pour émettre de secondes informations d'invite d'avertissement lorsque la dimension de la zone de chevauchement est plus importante que la dimension de la zone de chevauchement prédéterminée et que l'occupant se trouve sur le siège correspondant à la zone de chevauchement, dans lequel les secondes informations d'invite d'avertissement sont utilisées pour inciter le conducteur à ajuster un emplacement de stationnement.

7. Appareil selon la revendication 6, comprenant en outre :
un module de marquage de plage configuré pour marquer une plage de position de la plage d'ouverture/fermeture de porte dans le diagramme d'interface de visualisation des alentours sur la base de la plage d'ouverture/fermeture de porte du véhicule,
dans lequel le module d'identification d'image comprend :
un sous-module d'identification d'image configuré pour réaliser l'identification sur l'image de l'obstacle pour obtenir des informations de contours de l'obstacle ; et
un sous-module de marquage de plage configuré pour marquer la plage de contours de l'obstacle dans le diagramme d'interface de visualisation des alentours sur la base des informations de contours.

8. Appareil selon la revendication 6, dans lequel le module de détermination de risque comprend :
un sous-module de détermination de siège configuré pour déterminer un siège correspondant à la zone de chevauchement sur la base de la zone de chevauchement lorsque la zone de chevauchement existe entre la plage de contours et la plage d'ouverture/fermeture de porte ;
un sous-module de détection d'occupant configuré pour détecter le fait qu'un occupant est présent ou non sur le siège correspondant à la zone de chevauchement ; et
un second sous-module de détermination de risque configuré pour déterminer, lorsque l'occupant est sur le siège correspondant à la zone de chevauchement, le fait qu'un risque de collision associé à l'ouverture d'une porte correspondant à la zone de chevauchement existe et déterminer un avertissement de risque correspondant.

9. Appareil selon l'une quelconque des revendications 6 à 8, dans lequel un limiteur est fourni sur la porte du véhicule, et l'appareil comprend en outre :
un module de détermination d'angle configuré pour déterminer un angle d'ouverture maximum correspondant à une porte cible sur la base d'une dimension de la zone de chevauchement, dans lequel la porte cible est une porte correspondant à la zone de chevauchement ; et
un module d'ajustement de position configuré pour ajuster une position du limiteur par rapport à la porte cible sur la base de l'angle d'ouverture maximum, dans lequel le limiteur est utilisé pour restreindre l'angle d'ouverture maximum de la porte.

10. Véhicule, comprenant :
un ou plusieurs processeurs (110) ;
une mémoire (120) ; et
un ou plusieurs programmes stockés dans la mémoire (120) et configurés pour être exécutés par les un ou plusieurs processeurs (110),
**caractérisé en ce que**
les un ou plusieurs programmes sont configurés pour mettre en oeuvre le procédé selon l'une quelconque des revendications 1 à 5.

11. Support de stockage lisible par ordinateur, présentant des codes de programme (310) stockés dessus, **caractérisé en ce que**
les codes de programme (310), lorsqu'invoqués par un processeur, mettent en oeuvre le procédé selon l'une quelconque des revendications 1 à 5.
